# EUROPÄISCHE PATENTSCHRIFT

(11) **EP 3 284 966 B1**
(45) Veröffentlichungstag und Bekanntmachung des Hinweises auf die Patenterteilung: **20.01.2021**
(21) Anmeldenummer: 17183656.2
(22) Anmeldetag: 28.07.2017
(51) Int. Cl.: F16C 35/077, F16C 33/66, F16C 33/30, F16C 19/06, F16C 27/04, F16C 33/58, F16C 37/00, F16C 33/64

(54) **LAGERANORDNUNG, INSBESONDERE FÜR EINE STRÖMUNGSMASCHINE, UND STRÖMUNGSMASCHINE MIT EINER DERARTIGEN LAGERANORDNUNG**
BEARING ARRANGEMENT, IN PARTICULAR FOR A TURBO MACHINE, AND TURBO MACHINE WITH A BEARING ARRANGEMENT OF THIS TYPE
SYSTÈME DE PALIER, EN PARTICULIER POUR UNE TURBOMACHINE ET TURBOMACHINE COMPRENANT UN TEL SYSTÈME DE PALIER

(30) Priorität: 29.07.2016 DE 102016214018
(43) Veröffentlichungstag der Anmeldung: 21.02.2018
(73) Patentinhaber: Schaeffler Technologies AG & Co. KG, 91074 Herzogenaurach (DE); MTU Aero Engines AG, 80995 München (DE)
(72) Erfinder: Flouros, Michael, 80686 München (DE); Glöckner, Peter, 97424 Schweinfurt (DE); Mirring, Patrick, 97332 Gaibach (DE); Martin, Matthias, 97074 Würzburg (DE)
(74) Vertreter: Isarpatent

(56) Entgegenhaltungen:
- WO-A1-2011/067154
- DE-A1-102005 058 141
- DE-A1-102012 203 933
- DE-A1-102014 216 313
- FR-A1- 2 965 858
- JP-A- 2015 183 697
- US-A1- 2013 084 035

## Beschreibung

Die Erfindung betrifft eine Lageranordnung, insbesondere für eine Strömungsmaschine, und eine Strömungsmaschine mit einer derartigen Lageranordnung.

Bei Triebwerkshauptwellenlagern erfolgt eine Kühlung bisher entweder durch seitliche Öleinspritzung oder durch Ausnutzung der Zentrifugalkraft mittels unter der zu lagernden Welle zugeführtem Kühlöl. Die bekannte Außenringkühlung durch einen Kühlkanal im Außenring des Lagers kühlt den Lageraußenring direkt und trägt zu einer teilweisen Entkopplung von Lagerschmierung und -kühlung bei. Bekannt ist auch eine direkte Außenringkühlung, welche gemäß der Druckschrift EP 2 304 259 im steifen Lagersitz erfolgt ohne eine zusätzliche Quetschfilmdämpfung oder im quetschfilmgedämpften Sitz wie in der Druckschrift WO 2011/067154 beschrieben mit einer kombinierten Außenringkühlung und Quetschfilmdämpfung. Die Kombination aus direkter Außenringkühlung und Quetschfilmdämpfung kann mit stationärem bzw. drehendem Außenring erfolgen, wie in der Druckschrift DE 10 2012 203 933 beschrieben, die eine Lageranordnung offenbart, die der Lageranordnung von Anspruch 1 am nächstliegend ist.

Darüber hinaus sind auch Wälzlager mit sowohl einem Stahl- als auch einem Keramikkontaktpartner bekannt, wobei der Stahlkontaktpartner gezielt eingebrachte Druckeigenspannungen besitzt, wie aus der US 2012/0037278 A1 hervorgeht.

Die Dauerfestigkeit der bisher verwendeten warmfesten Stähle nimmt mit steigender Temperatur ab. Ferner sind die zur Schmierung und Wärmeabfuhr verwendeten Öle in der Betriebstemperatur begrenzt und die Temperatur im Kontaktbereich kann bei den momentan verwendeten Lagerwerkstoffen und Ölen somit nicht wesentlich gesteigert werden. Der Nachteil besteht vor allem darin, dass die Belastung der Außenringkontakte entscheidend durch die Fliehkräfte der Stahlwälzkörper negativ beeinflusst wird. Bei den bisher eingesetzten Stahlwälzkörpern ist diese, besonders bei sehr hohen Drehzahlen, sehr hoch und verlangt größere Kühlölströme, die wiederum mit erhöhten Lagerverlustleistungen und einer größer dimensionierten Ölsystemarchitektur, wie Pumpen, Zu- und Abflussleitungen, Dichtungen usw. verbunden sind.

Aufgabe der vorliegenden Erfindung ist es eine verbesserte Lageranordnung sowie eine verbesserte Strömungsmaschine bereitzustellen.

Diese Aufgabe wird durch die Lageranordnung gemäß Patentanspruch 1 und eine Strömungsmaschine mit einer derartigen Lageranordnung gemäß Patentanspruch 15 gelöst.

Demgemäß ist eine Lageranordnung, insbesondere für eine Strömungsmaschine, vorgesehen, aufweisend:
einen Lagerinnenring;
einen dem Lagerinnenring gegenüberliegenden Lageraußenring, welcher wenigstens einen Kühlkanal aufweist;
Wälzkörper aus Keramik, welche zwischen dem Lagerinnenring und dem Lageraußenring angeordnet sind; und
einen Lagerumring, welcher mit dem Lageraußenring verbunden und ausgebildet ist, einen Quetschfilm aus Öl zwischen seiner Außenseite und einer der Außenseite gegenüberliegenden Innenseite eines Gehäuses auszubilden, in welchem die Lageranordnung anordenbar ist.

Durch die Wälzköper aus Keramik kann einerseits eine Verringerung der Lager- und Wälzkontaktbelastung und andererseits eine effektive Wärmeabfuhr aus dem Kontaktbereich sowie eine Dämpfung erzielt werden, durch das Vorsehen einer Quetschfilmdämpfung in Verbindung mit dem Vorsehen wenigstens eines Kühlkanals im Lageraußenring.

Bevorzugte Weiterbildungen sind Gegenstand der Unteransprüche.

In einer Ausführungsform der Erfindung ist bzw. sind der Lagerinnenring und/oder der Lageraußenring mit einer Druckeigenspannung versehen. Die Druckeigenspannung in dem Lagerinnenring bzw. Lageraußenring kann beispielsweise durch ein Nitrierverfahren und wahlweise zusätzlich durch eine Wärmebehandlung in dem Lagerinnenring bzw. Lageraußenring erzeugt werden. Eine derartig gezielt eingebrachte Druckeigenspannung des jeweiligen Lagerrings hat den Vorteil, dass sie einer fortgesetzten Rissbildung des Lagerrings entgegenwirkt

In einer anderen Ausführungsform der Erfindung ist der wenigstens eine Kühlkanal im Inneren des Lageraußenrings oder an der Außenseite des Lageraußenrings ausgebildet. Der wenigstens eine Kühlkanal kann an der Außenseite des Lageraußenrings beispielsweise durch ein spanendes Fertigungsverfahren ausgebildet sein. Des Weiteren kann der wenigstens eine Kühlkanal im Inneren des Lageraußenrings wiederum z.B. durch ein generatives Fertigungsverfahren, insbesondere Laserschmelzen oder Lasersintern, ausgebildet sein. Mittels eines generativen Fertigungsverfahrens lassen sich auch problemlos Kühlkanäle mit einem definierten komplexen Querschnitt oder Querschnittsverlauf in Längsrichtung des Kühlkanals ausbilden. Ein spanendes Verfahren, wie z.B. Drehen, eignet sich besonders gut um einen spiralförmig verlaufenden Kühlkanal an der Außenseite des Lageraußenrings auszubilden.

Gemäß einer Ausführungsform der Erfindung weist der Kühlkanal einen kreisförmigen, dreieckigen, halbkreisförmigen, langlochförmigen, ovalen und/oder polygonalen Querschnitt auf. Die Dimensionierung und/oder die Form des Querschnitts des Kühlkanals entlang der Länge des Kühlkanals kann dabei konstant sein oder variieren je nach Funktion und Einsatzzweck.

In einer Ausführungsform der Erfindung weist der Lagerumring an seiner Außenseite wenigstens eine Ölverteilungsnut auf. Die Ölnut hat den Vorteil, dass sie Öl aufnehmen und zwischenspeichern kann.

Des Weiteren kann in einer anderen Ausführungsform der Erfindung eine Abdichtung an der Außenseite des Lagerumrings vorgesehen sein zur Abdichtung der beiden Enden des Quetschfilms. Der Lagerumring kann dabei an seiner Außenseite beispielsweise an beiden Enden des auszubildende Quetschfilms eine Aufnahme und ein darin aufgenommenes Dichtelement zur Abdichtung des Quetschfilms aufweisen. Auf diese Weise kann ein ungewolltes seitliches Abfließen des Öls für den Quetschfilm verhindert werden.

Der Lagerumring weist in einer weiteren Ausführungsform der Erfindung an einer Seite eine Kühlmittelzuleitung auf, welche mit dem wenigstens einen Kühlkanal des Lageraußenrings zum Zuführen von Kühlmittel, und insbesondere zum Zuführen des Kühlmittels durch eine Kühlmitteldüse, gekoppelt ist. Als Kühlmittel wird beispielsweise Öl verwendet. Durch die Kühlmittelleitung kann sehr einfach von außen von der Seite dem Kühlkanal durch die Kühlmittelzuleitung in dem Lageraußenring Kühlmittel, z.B. Öl, zugeführt werden.

Der Lagerumring weist gemäß einer Ausführungsform der Erfindung eine Kühlmittelzuführung auf, welche sich von seiner Außenseite zu dem wenigstens einen Kühlkanal des Lageraußenrings oder zu einem Verbindungskanal des Lageraußenrings mit dem wenigstens einen Kühlkanal erstreckt, zum Zuführen von Öl des Quetschfilms dem Kühlkanal. Die Kühlmittelzuführung an der Außenseite des Lageraußenrings kann sehr einfach mit einer Ölzuführungsleitung des Gehäuses gekoppelt und dadurch Kosten eingespart werden.

In einer Ausführungsform der Erfindung weist der Lageraußenring eine Kühlmittelableitung auf, welche mit dem wenigstens einen Kühlkanal verbunden ist zum Ableiten von Kühlmittel aus dem Kühlkanal nach außen. Dadurch kann Kühlmittel, welches nicht mehr benötigt oder verbraucht ist leicht nach außen aus der Lageranordnung abgeführt werden.

Der Lagerinnenring weist in einer weiteren Ausführungsform der Erfindung wenigstens eine Kühlmittelzuführungsleitung auf. Diese kann bei einem zweigeteilten Lagerring zwischen seinen beiden Lagerringhälften vorgesehen sein.

Der Lagerinnenring und/oder der Lageraußenring weist in einer anderen Ausführungsform der Erfindung wenigstens eine Aufnahme zur Aufnahme eines Sensors, beispielsweise eines Thermoelements, auf. Durch das Thermoelement kann die Temperatur des jeweiligen Lagerrings bestimmt und beispielsweise die Kühlung des Lagerrings gesteuert und/oder geregelt werden.

Der Lagerumring und der Lageraußenring sind gemäß der Erfindung form- und/oder kraftschlüssige miteinander verbunden. Beispielsweise können sich durch eine Presspassung, eine Schraubverbindung, eine Schweißverbindung, eine Verzahnung und/oder eine Passfederverbindung miteinander verbunden sein, dadurch ist kein Zentrieren und Anflanschen des Lagerumrings an einem Gehäuse einer Strömungsmaschine erforderlich.

Der Lageraußenring weist in einer anderen Ausführungsform nicht Teil der Erfindung wenigstens einen Federstab auf zum Anflanschen und Zentrieren des Lageraußenrings an dem Gehäuse, an welchem die Lageranordnung anordenbar ist.

Die Strömungsmaschine weist in einer Ausführungsform der Erfindung ein Gehäuse auf, in welchem die Lageranordnung anordenbar ist zur Lagerung einer Welle der Strömungsmaschine. Die Strömungsmaschine ist dabei beispielsweise ein Flugtriebwerk oder eine Gasturbine, z.B. eine stationäre Gasturbine ist.

### Kurze Beschreibung der Zeichnungen

Weitere Merkmale und Vorteile der vorliegenden Erfindung werden nachfolgend anhand der Figur erläutert. Es zeigt:

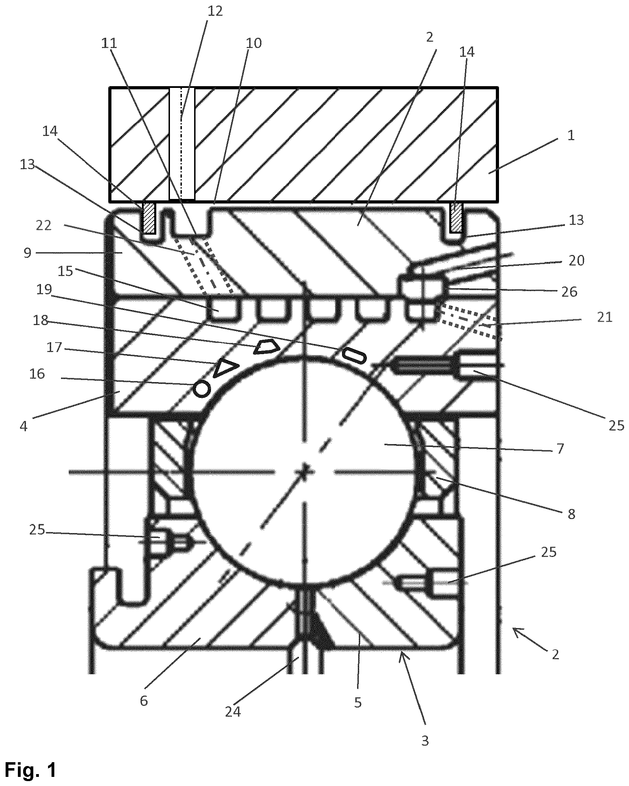

Fig. 1 eine Schnittansicht durch einen Teil eines Gehäuse und einer Lageranordnung gemäß einer Ausführungsform der Erfindung gezeigt.

### Ausführungsformen der Erfindung

In Fig. 1 ist eine Schnittansicht durch einen Teil eines Gehäuse 1 und einer Lageranordnung 2 gemäß einer Ausführungsform der Erfindung gezeigt. Die erfindungsgemäße Lageranordnung 2 ist dabei in einem Gehäuse 1 eingebaut dargestellt.

Bei der erfindungsgemäßen Lageranordnung 2, wie sie im Folgenden anhand von Fig. 1 detailliert erläutert wird, kann eine Verringerung der Lager- und Wälzkontaktbelastung durch den Einsatz von keramischen Wälzkörpern 7 erzielt werden. Des Weiteren kann eine Quetschfilmdämpfung in Verbindung mit einer effektiven Wärmeabfuhr aus dem Kontaktbereich bereitgestellt werden durch zumindest wenigstens einen in dem Lageraußenring vorgesehenen Kühlkanal und vorzugsweise einen dabei an die Laufbahnform zusätzlich angeschmiegt ausgebildeten Kühlkanal mit einer speziellen Querschnittsform. Außerdem können die Lagerringe aus Stahl mit leistungsgesteigerten Laufbahnen versehen werden, durch Einbringung eines gezielt eingebrachten Druckeigenspannungsverlauf was wiederum zu einer Erhöhung der Überrollfestigkeit und einer Reduzierung der Beanspruchung führt. Weitere können mit der erfindungsgemäßen Lageranordnung gleichzeitig höhere Geschwindigkeiten bzw. Drehzahlen erreicht werden.

Auf diese Weise können bei der erfindungsgemäßen Lageranordnung 2 die Verlustleistungen und Temperaturen reduziert, Überrollfestigkeiten und Lebensdauer gesteigert, sowie die benötigte Ölmenge und das Lager- und Systemgewicht verringert werden, bei einer gleichzeitig gesteigerten Geschwindigkeit bzw. Drehzahl.

Die Lageranordnung 2 gemäß der Ausführungsform der Erfindung, wie sie in Fig. 1 gezeigt ist, weist einen Lagerinnenring 3 und einen Lageraußenring 4 auf. Der Lagerinnenring 3 ist in dem Ausführungsbeispiel in Fig. 1 beispielsweise zweiteilig ausgebildet und weist zwei Lagerinnenringhälften 5, 6 auf. Der Lagerinnenring 3 kann jedoch ebenso auch einteilig ausgebildet sein.

Zwischen dem Lagerinnenring 3 und dem Lageraußenring 4 sind die Wälzköper 7 der Lageranordnung aufgenommen und beispielsweise in einem optionalen Käfig 8 zusätzlich geführt.

Die Wälzköper 7 sind hierbei aus Keramik, insbesondere aus einer Hochleistungskeramik wie z.B. Si₃N₄. Dies hat den Vorteil gegenüber herkömmlichen Wälzkörpern aus Stahl, dass die Wälzkörper 7 aus Keramik eine geringere Verlustleistung aufweisen.

In dem Ausführungsbeispiel in Fig. 1 sind als Wälzkörper 7 beispielsweise Kugeln vorgesehen. Neben Kugeln als Wälzkörper können ebenso z.B. Zylinder, Nadeln, Tonnen oder Kegel usw. eingesetzt werden. Die erfindungsgemäße Lageranordnung 2 ist jedoch auf die genannten Beispiele für Wälzkörper 7 nicht beschränkt.

Des Weiteren weist die Lageranordnung 2 einen Lagerumring 9 auf, welcher mit dem Lageraußenring 4 verbunden ist. Die Verbindung von Lagerumring 9 und Lageraußenring 4 erfolgt dabei durch eine form- und/oder kraftschlüssige Verbindung, wie z.B. eine Presspassung, eine Schraubverbindung, eine Schweißverbindung, eine Verzahnung und/oder eine Passfederverbindung usw.. Die Erfindung ist jedoch auf die genannten Beispiele einer form- und/oder kraftschlüssigen Verbindung nicht beschränkt. Die erfindungsgemäße Lageranordnung 2 hat den Vorteil, dass der Lageraußenring 4 nicht zwangsläufig, wie im Stand der Technik zentriert über zusätzliche sogenannte Federstäbe an ein zugeordnetes Gehäuse angeflanscht werden muss, sondern frei, d.h. ohne Zentrierung, mit dem für die Quetschfilmdämpfung benötigten Lagerumring 9 verbunden wird, wie in dem Ausführungsbeispiel in Fig. 1 gezeigt ist.

Dabei wird ein Quetschfilm 10 aus Öl oder Schmieröl zur Dämpfung der Lageranordnung 2 zwischen der Außenseite des Lagerumrings 9 und der gegenüberliegenden Innenseite des Gehäuses 1 ausgebildet. Der Lagerumring 9 weist an seiner Außenseite in dem Ausführungsbeispiel in Fig. 1 eine optionale zusätzliche Ölverteilungsnut 11 auf.

Die Ölverteilungsnut 11 kann, wie in dem Ausführungsbeispiel in Fig. 1 gezeigt ist, beispielsweise mit einer Ölzuführungsleitung 12 des Gehäuses 1 gekoppelt oder verbunden werden. Auf diese Weise kann Öl über das Gehäuse 1 und dessen

Ölzuführungsleitung 12 zwischen die Außenseite des Lagerumrings 9 und die Innenseite des Gehäuses 1 eingeführt und insbesondere der Ölverteilungsnut 11 zugeführt werden, um den Quetschfilm 10 auszubilden.

Wie in Fig. 1 gezeigt ist, ist dabei eine zusätzliche seitliche Abdichtung zwischen dem Gehäuse 1 und dem Lagerumring 9 vorgesehen, um ein ungewolltes seitliches Austreten des Öls des Quetschfilms 10 aus dem Spalt zwischen der Innenseite des Gehäuses 1 und der Außenseite des Lagerumrings 9 zu verhindern. In dem Ausführungsbeispiel in Fig. 1 sind hierzu Aufnahmen 13, z.B. Vertiefungen in Form von Nuten, an der Außenseite des Lagerumrings 9 vorgesehen, in welchen jeweils ein Dichtungselement 14 aufgenommen ist, beispielsweise ein Kolbenring, zur seitlichen Abdichtung des aus dem zugeführten Öl gebildeten Quetschfilms 10. Zusätzlich können solche Aufnahmen 13 sowie ein jeweils darin aufzunehmendes Dichtungselement 14 auch an der Innenseite des Gehäuses 1 vorgesehen werden.

Infolge der Selbstzentrierung der erfindungsgemäßen Lageranordnung 2 besitzt der Quetschfilmdämpfer bzw. die Quetschfilmdämpfung der Lageranordnung 2 keine statische Steifigkeit. Die dynamische Steifigkeit stellt sich erst ab Erreichen einer bestimmten Rotordrehzahl einer durch die Lageranordnung 2 gelagerten Welle ein. Damit werden bei der erfindungsgemäßen Lageranordnung 2 gegenüber einer herkömmlichen zentrierten Konstruktion Gewicht, axialer Bauraum und Montageaufwand reduziert.

Der Lageraußenring 4 weist wenigstens einen Kühlkanal 15 auf. In dem in Fig. 1 gezeigten Ausführungsbeispiel ist beispielsweise ein spiralförmiger Kühlkanal 15 an der Außenseite des Lageraußenrings 4 vorgesehen. Ebenso ist es auch möglich statt des spiralförmigen Kühlkanals 15 in Fig. 1 mehrere ringförmige Kühlkanäle an der Außenseite des Lageraußenrings 4 vorzusehen, die wahlweise zusätzlich z.B. über Verbindungskanäle miteinander verbunden sein können.

Der Kühlkanal 15 kann beispielsweise an der Außenseite des Lageraußenrings 4 als eine Vertiefung, z.B. Nut, ausgebildet sein, wie in Fig. 1 gezeigt ist. Dazu kann der Kühlkanal 15 beispielsweise an der Außenseite des Lageraußenrings 4 durch ein spanendes Fertigungsverfahren wie z.B. Drehen oder ein anderes geeignetes Fertigungsverfahren oder eine Kombination von Fertigungsverfahren ausgebildet sein. Ebenso können ein oder mehrere Kühlkanäle 15 auch innerhalb des Lageraußenrings 4 zumindest teilweise oder vollständig umlaufende ausgebildet sein, beispielsweise durch Lasersintern, Laserschmelzen oder ein anderes geeignetes generatives Fertigungsverfahren. Der jeweilige Kühlkanal 15 kann, wie in Fig. 1 beispielhaft gezeigt ist, z.B. einen kreisförmigen Querschnitt 16, einen dreieckigen Querschnitt 17, einen mehreckigen oder polygonalen Querschnitt 18, einen halbkreisförmigen Querschnitt, einen Querschnitt in Form eines Kreisringabschnitts oder einen Querschnitt in Form eines Langlochs 19 aufweisen. Der Querschnitt des Kühlkanals 15 kann zusätzlich an die Kontur der Innenseite des Lageraußenrings 4 angepasst sein und z.B. entlang zumindest eines Abschnitts der Kontur verlaufen. Ein Querschnitt in Form eines Langlochs kann beispielsweise entlang der Kontur der Innenseite des Lageraußenrings 4 gekrümmt verlaufen. Die Erfindung ist jedoch auf die genannten Beispiele für eine Querschnittsform des Kühlkanals 15 nicht beschränkt ist. Des Weiteren können die Dimensionierung und/oder die Form des Querschnitts des Kühlkanals 15 in Längsrichtung des Kühlkanals 15 konstant sein bzw. gleichbleibend sein oder alternativ variieren, je nach Funktion und Einsatzzweck.

In dem in Fig. 1 gezeigten Ausführungsbeispiel der erfindungsgemäßen Lageranordnung 2, wird Kühlmittel, z.B. Öl, dem Kühlkanal 15 des Lageraußenrings 4 über eine Kühlmittelzuleitung 20, z.B. Kühlmittelbohrung, in dem Lageraußenring 4, zugeführt, beispielswiese über eine Kühlmittelverteilungsnut 26.

Im Fall eines innerhalb des Lageraußenrings 4 vorgesehenen Kühlkanals 15 kann ebenfalls eine entsprechende Kühlmittelzuleitung vorgesehen sein zum Zuführen des Kühlmittels dem Kühlkanal 15. Solche Kühlmittelzuleitungen können durch Bohren oder ebenfalls wie der jeweilige Kühlkanal 15 innerhalb des Lageraußenrings 4 mittels eines generativen Fertigungsverfahrens, wie Lasersintern oder Laserschmelzens usw. hergestellt werden. Wahlweise zusätzlich kann auch eine zusätzliche Kühlmittelableitung 21 in dem Lageraußenring 4 vorgesehen werden, beispielsweise eine Bohrung, zum Abführen des Kühlmittels aus dem Kühlkanal 15 nach Kühlen des Kühlkanals 15. Derartige Bohrungen können beispielsweise durch Bohren oder mittels eines generativen Fertigungsverfahrens, wie z.B. Laserschmelzen oder Lasersintern usw., hergestellt werden.

Durch die Kühlung des Lageraußenrings 4 durch Versehen des Lageraußenrings 4 mit wenigstens einem Kühlkanal 15 kann eine sehr effektive Abfuhr von in den Wälzkontakten dissidierter Energie erzielt werden. Des Weiteren können durch die Verwendung von Wälzkörpern 7 aus Keramik, die Zentrifugalbelastung und die im Wälzkontakt erzeugten Verlustleistungen reduziert werden.

In einer weiteren Ausführungsform der Erfindung kann, wie mit einer gepunkteten Linie in Fig. 1 angedeutet ist, der Lagerumring 9 mit einer Kühlmittelzuführung 22, beispielsweise einer Kühlmittelzuführungsbohrung, versehen sein, welche Öl des Quetschfilms 10 zwischen der Innenseite des Gehäuses 1 und der Außenseite des Lagerumrings 9 dem Kühlkanal 15 des Lageraußenrings 4 zuführt. Die Kühlmittelzuführung 22 des Lagerumrings 9 erstreckt sich in dem Ausführungsbeispiel in Fig. 1 dabei z.B. von der Ölverteilungsnut 11 an der Außenseite des Lagerumrings 9 zu dem Kühlkanal 15 an der Außenseite des Lageraußenrings 4. Über die Kühlmittelableitung 21 kann dabei ebenfalls das Ableiten des verbrauchten Kühlmittels, hier Öls, erfolgen.

Im Falle eines innerhalb des Lageraußenrings 4 vorhandenen Kühlkanals 15 ist der Lageraußenring 4 mit einer entsprechenden nicht dargestellten Zuleitung versehen, welche die Kühlmittelzuführung 22 des Lagerumrings 9 mit dem Kühlkanal 15 des Lageraußenrings 4 verbindet.

Des Weiteren ist, wie in Fig. 1 ebenfalls mit einer gepunkteten Linie angedeutet, eine Kühlmittelableitung 21 an dem Lageraußenring 4 vorgesehen, mittels der das Dämpferöl des Quetschfilms 10 anschließend wieder abgeführt werden kann. Die Kühlmittelableitung 21 erstreckt sich in dem Ausführungsbeispiel in Fig. 1 dazu von dem Kühlkanal 15 des Lageraußenrings 4 beispielsweise zu einer Seite des Lageraußenrings 4 zum Abführen des Dämpferöls des Quetschfilms 10.

Diese Ausführungsform der Lageranordnung 2 hat den Vorteil, dass das Dämpferöl des Quetschfilms 10 für die direkte Lageraußenringkühlung verwendet werden kann. Dazu wird in dem Lageraußenring 4, wie zuvor beschrieben, lediglich eine Kühlmittelzuführung 22 von dem Quetschfilm 10, welches als Dämpferölfilm fungiert, zu dem Kühlkanal 15 des Lageraußenrings 4 und eine Abführen dieses Öls über eine Kühlmittelableitung 21 aus dem Lageraußenring 4 vorgesehen. Bei dieser Ausführungsform der erfindungsgemäßen Lageranrodnung 2 kann die zuvor beschriebene Kühlmittelzuleitung 20 in dem Lageraußenring 4 weggelassen werden, da das Öl für den Quetschfilm 10 zusätzlich als Kühlmittel für den Kühlkanal 15 verwendet wird.

Wie in dem Ausführungsbeispiel in Fig. 1 gezeigt ist, ist beispielsweise wenigstens eine zusätzliche Kühlmittelzuführungsleitung 24 in dem Lagerinnenring 3 vorgesehen zum Zuführen von Kühlmittel, z.B. Öl, in die Seitenflächen der Lagerinnenringhälften 5, 6 des zweiteilig ausgeführten Lagerinnenrings 3. Dabei wird eine sog. "under-race" Ölmenge als Kühlmittelmenge über eine sog. "split-line" dem Lagerinnenring 3 zugeführt. Die Erfindung ist jedoch, wie zuvor beschrieben, nicht auf einen zweiteilig ausgeführten Lagerinnenring 3 beschränkt. Der Lagerinnenring 3 ist gemäß Erfindung einteilig ausgeführt und mit einer Kühlmittelzuführungsleitung 24 versehen.

In der Ausführungsform der erfindungsgemäßen Lageranordnung 2 können wahlweise zusätzlich ein oder, wie in dem Ausführungsbeispiel in Fig. 1, mehrere Aufnahmen 25, z.B. Bohrungen, zur Aufnahme eines jeweiligen nicht dargestellten Thermoelements vorgesehen. Mittels eines solchen Thermoelements wird die Lagertemperatur der Lageranordnung 2 bestimmt und überwacht.

In den Lageraußenring 4 und/oder den Lagerinnenring 3, beispielsweise aus Stahl, sind bei der erfindungsgemäßen Lageranordnung 2 vorzugsweise zusätzlich Druckeigenspannungen gezielt eingebracht. Solche Druckeigenspannungen in der Lageraußenringlaufbahn bzw. der Lagerinnenringlaufbahn haben den Vorteil, dass beispielsweise einem Schadensfortschritt z.B. aufgrund von Rissen in dem Bauteil entgegengewirkt werden kann. Das Einbringen solcher Druckeigenspannungen in den Lageraußenring 4 bzw. den Lagerinnenring 3 kann beispielsweise durch ein Nitrierverfahren wahlweise zusätzlich eine Wärmebehandlung erfolgen. Dadurch wird die Härte und Festigkeit des Lageraußenrings 4 bzw. Lagerinnenrings 3 erhöht.

Bei der erfindungsgemäßen Lageranordnung 2 können sowohl die Quetschfilmdämpfung am Außendurchmesser des Lagerumrings 9, der Kühlkanal 15 am Lageraußenring 4, und die Schmierkühlzuführung über eine durch die Lageranordnung 2 gelagerte Welle mit je einer dafür bestimmten Ölzuführung 20, 22 versorgt werden. Das Öl kann dabei als Kühl- und Schmiermittel dienen.

Wie zuvor beschrieben ist es grundsätzlich möglich, dass das für die Quetschfilmdämpfung verwendete Öl gleichzeitig auch für die Lageraußenringkühlung verwendet werden kann. Durch die direkte Kühlung des Lageraußenrings 4 verringerte sich die Lageraußenringtemperatur signifikant und die Beanspruchung im Wälzkontakt wird verringert. Gleichzeitig bedeutet eine verringerte Materialtemperatur des Lageraußenrings 4 eine erhöhte Dauerfestigkeit gegen klassische Überrollungsermüdung und Oberflächenermüdung. Im Gegensatz zur sog "under-race"-Kühlung über die kleinen Innenringseitenflächen, wird somit eine Trennung von Schmierung und Kühlung für den Lageraußenring 4 erreicht. Die über die zusätzliche Kühlmittelzuführungsleitung 24 in dem Lagerinnenring 3 zugeführte Ölmenge zur Schmierung und Kühlung kann somit deutlich reduziert werden. Infolgedessen verringern sich die Walk- und Planschverluste der Lageranordnung 2. Die geringere Lagertemperatur und die geringere benötigte Ölmenge bedeuten auch ein reduziertes Ölgewicht, so dass ein kleinerer Öltank möglich ist, aber auch eine kleinere Dimensionierung eines Öl/Luft- und Öl/Kerosin-Kühlers. Ferner können bei kleineren benötigten Ölmengen kleinere, leistungseffizientere Ölpumpen verwendet werden. D.h. die gesamte Ölsystemarchitektur profitiert hinsichtlich Leistungs- und Gewichtseinsparung sowie Effizienzsteigerung vom Einsatz der erfindungsgemäßen Lageranordnung 2.

Die zuvor beispielhaft beschriebene erfindungsgemäße Lageranordnung kann als Wälzlageranordnung insbesondere in thermisch und mechanisch hochbeanspruchten Anwendungen wie bei Flugtriebwerken und stationären Gasturbinen eingesetzt werden, beispielsweise als Hauptwellenlagerungen von Flugtriebwerken oder stationären Gasturbinen. Die Erfindung ist jedoch auf die genannten Einsatzgebiete nicht beschränkt.

Obwohl die vorliegende Erfindung anhand bevorzugter Ausführungsbeispiele vorstehend vollständig beschrieben wurde, ist sie darauf nicht nur peschränkt, Die Erfindung ist anhand der anhängigen Ansprüche definiert.

### Bezugszeichenliste

- 1: Gehäuse
- 2: Lageranordnung
- 3: Lagerinnenring
- 4: Lageraußenring
- 5: erste Lagerinnenringhälfte
- 6: zweite Lagerinnenringhälfte
- 7: Wälzkörper
- 8: Käfig
- 9: Lagerumring
- 10: Quetschfilm
- 11: Ölverteilungsnut
- 12: Ölzuführungsleitung (Gehäuse)
- 13: Aufnahme
- 14: Dichtungselement
- 15: Kühlkanal
- 16: kreisförmiger Querschnitt
- 17: dreieckiger Querschnitt
- 18: polygonaler Querschnitt
- 19: Querschnitt in Form eines Langlochs
- 20: Kühlmittelzuleitung (Lageraußenring)
- 21: Kühlmittelableitung (Lageraußenring)
- 22: Kühlmittelzuführung
- 24: Kühlmittelzuführungsleitung (Lagerinnenring)
- 25: Aufnahme für Thermoelement
- 26: Kühlmittelverteilungsnut

## Patentansprüche

1. Lageranordnung (2), insbesondere für eine Strömungsmaschine, aufweisend:
einen Lagerinnenring (3);
einen dem Lagerinnenring (3) gegenüberliegenden Lageraußenring (4), welcher wenigstens einen Kühlkanal (15) aufweist;
Wälzkörper (7) aus Keramik, welche zwischen dem Lagerinnenring (3) und dem Lageraußenring (4) angeordnet sind; und
einen Lagerumring (9), welcher mit dem Lageraußenring (4) verbunden und derart ausgebildet ist, einen Quetschfilm (10) aus Öl zwischen seiner Außenseite und einer der Außenseite gegenüberliegenden Innenseite eines Gehäuses (1) auszubilden, in welchem die Lageranordnung anordenbar ist, wobei der Lagerumring (9) und der Lageraußenring (4) kraftschlüssig miteinander verbunden sind ohne Zentrierung und Anflanschung über zusätzliche Federstäbe an einem zugeordneten Gehäuse und wobei der Lagerinnenring (3) mit wenigstens einer Kühlmittelzuführungsleitung (24) versehen ist.

2. Lageranordnung nach Anspruch 1, **dadurch gekennzeichnet, dass** der Lagerinnenring (3) und/oder der Lageraußenring (4) mit einer Druckeigenspannung versehen ist bzw. sind, wobei die Druckeigenspannung in dem Lagerinnenring (3) bzw. Lageraußenring (4) insbesondere durch ein Nitrierverfahren, vorzugsweise durch eine zusätzliche Wärmebehandlung, erzeugt wird.

3. Lageranordnung nach einem der vorstehenden Ansprüche, **dadurch gekennzeichnet, dass** der wenigstens eine Kühlkanal (15) im Inneren des Lageraußenrings (4) oder an der Außenseite des Lageraußenrings (4) ausgebildet ist, wobei der wenigstens eine Kühlkanal (15) an der Außenseite des Lageraußenrings (4), vorzugsweise durch ein spanendes Fertigungsverfahren, ausgebildet ist bzw. der wenigstens eine Kühlkanal (15) im Inneren des Lageraußenrings (4), vorzugsweise durch ein generatives Fertigungsverfahren, insbesondere Laserschmelzen oder Lasersintern, ausgebildet ist.

4. Lageranordnung nach einem der vorstehenden Ansprüche, **dadurch gekennzeichnet, dass** der Kühlkanal (15) einen kreisförmigen, dreieckigen, halbkreisförmigen, langlochförmigen, ovalen und/oder polygonalen Querschnitt aufweist, wobei die Dimensionierung und/oder Form des Querschnitts des Kühlkanals (15) entlang der Länge des Kühlkanals (15) konstant ist oder variiert.

5. Lageranordnung nach einem der vorstehenden Ansprüche, **dadurch gekennzeichnet, dass** der Lagerumring (9) an seiner Außenseite wenigstens eine Ölverteilungsnut (11) aufweist.

6. Lageranordnung nach einem der vorstehenden Ansprüche, **dadurch gekennzeichnet, dass** eine Abdichtung an der Außenseite des Lagerumrings (9) vorgesehen ist zur Abdichtung der beiden Enden des Quetschfilms (10), wobei der Lagerumring (9) an seiner Außenseite vorzugsweise an beiden Enden des auszubildende Quetschfilms (10) eine Aufnahme (13) und ein darin aufgenommenes Dichtelement (14) zur Abdichtung des Quetschfilms (10) aufweist.

7. Lageranordnung nach einem der vorstehenden Ansprüche, **dadurch gekennzeichnet, dass** der Lagerumring (9) an einer Seite eine Kühlmittelzuleitung (20) aufweist, welche mit dem wenigstens einen Kühlkanal (15) des Lageraußenrings (4) zum Zuführen von Kühlmittel, und insbesondere zum Zuführen des Kühlmittels durch eine Kühlmittelverteilungsnut (26), gekoppelt ist, wobei als Kühlmittel vorzugsweise Öl verwendet wird.

8. Lageranordnung nach einem der vorhergehenden Ansprüche, **dadurch gekennzeichnet, dass** der Lagerumring (9) eine Kühlmittelzuführung (22) zum Zuführen von Öl des Quetschfilms dem Kühlkanal (15) aufweist, wobei die Kühlmittelzuführung sich von der Außenseite des Lagerumrings (9) zu dem wenigstens einen Kühlkanal (15) des Lageraußenrings (4) oder zu einem Verbindungskanal des Lageraußenrings (4) mit dem wenigstens einen Kühlkanal (15) erstreckt.

9. Lageranordnung nach einem der vorhergehenden Ansprüche, **dadurch gekennzeichnet, dass** der Lageraußenring (4) eine Kühlmittelableitung (21) aufweist, welche mit dem wenigstens einen Kühlkanal (15) zum Ableiten von Kühlmittel aus dem Kühlkanal (15) nach außen verbunden ist.

10. Lageranordnung nach einem der vorhergehenden Ansprüche, **dadurch gekennzeichnet, dass** der Lagerinnenring wenigstens eine Kühlmittelzuführungsleitung aufweist und der Lagerinnenring insbesondere einteilig oder zweiteilig ausgebildet ist.

11. Lageranordnung nach einem der vorhergehenden Ansprüche, **dadurch gekennzeichnet, dass** der Lagerinnenring (3) und/oder der Lageraußenring (4) wenigstens eine Aufnahme (25) zur Aufnahme eines Sensors, insbesondere eines Thermoelements, aufweist.

12. Lageranordnung nach einem der vorhergehenden Ansprüche, **dadurch gekennzeichnet, dass** der Lagerinnenring (3) und/oder der Lageraußenring (4) wenigstens eine Aufnahme (25) aufweist, in welcher ein Thermoelement aufgenommen ist, zur Bestimmung und Überwachung der Lagertemperatur der Lageranordnung (2).

13. Lageranordnung nach einem der vorhergehenden Ansprüche, **dadurch gekennzeichnet, dass** der Lagerumring (9) und der Lageraußenring (4) form- und kraftschlüssige, insbesondere durch eine Presspassung, eine Schraubverbindung, eine Schweißverbindung, eine Verzahnung und/oder eine Passfederverbindung, miteinander verbunden sind.

14. Strömungsmaschine mit einer Lageranordnung gemäß einem der vorstehenden Ansprüche, wobei die Strömungsmaschine ein Gehäuse (1) aufweist, in welchem die Lageranordnung (2) zur Lagerung einer Welle der Strömungsmaschine anordenbar ist, wobei die Strömungsmaschine insbesondere als ein Flugtriebwerk oder eine Gasturbine, insbesondere als eine stationäre Gasturbine, ausgebildet ist.

## Claims

1. Bearing arrangement (2), in particular for a turbo machine, comprising:
an inner bearing ring (3);
an outer bearing ring (4), opposite the inner bearing ring (3) and having at least one cooling duct (15);
ceramics roller bodies (7), which are arranged between the inner bearing ring (3) and the outer bearing ring (4); and
an encircling bearing ring (9), which is connected to the outer bearing ring (4) and is configured so as to configure an oil squeeze film (10) between the outer face thereof and an inner face, opposite the outer face, of a housing (1) in which the bearing arrangement can be arranged, the encircling bearing ring (9) and the outer bearing ring (4) being interconnected in a non-positive fit without centring and flange-mounting via additional spring rods on an associated housing, and the inner bearing ring (3) being provided with at least one coolant supply line (24).

2. Bearing arrangement according to claim 1, **characterised in that** the inner bearing ring (3) and/or the outer bearing ring (4) are provided with an internal compressive stress, the internal compressive stress in the inner bearing ring (3) or outer bearing ring (4) being generated in particular by a nitration process, preferably by an additional heat treatment.

3. Bearing arrangement according to any of the preceding claims, **characterised in that** the at least one cooling duct (15) is configured in the interior of the outer bearing ring (4) or on the outer face of the outer bearing ring (4), the at least one cooling duct (15) being configured on the outer face of the outer bearing ring (4), preferably by a cutting production method, or the at least one cooling duct (15) being configured in the interior of the outer bearing ring (4), preferably by a generative production method, in particular laser melting or laser sintering.

4. Bearing arrangement according to any of the preceding claims, **characterised in that** the cooling duct (15) has a circular, triangular, semi-circular, slot-shaped, oval and/or polygonal cross section, the dimensioning and/or shape of the cross section of the cooling duct (15) being constant or varying over the length of the cooling duct (15).

5. Bearing arrangement according to any of the preceding claims, **characterised in that** the encircling bearing ring (9) has at least one oil distribution groove (11) on the outer face thereof.

6. Bearing arrangement according to any of the preceding claims, **characterised in that** a seal is provided on the outer face of the encircling bearing ring (9) for sealing the two ends of the squeeze film (10), the encircling bearing ring (9) having on the outer face thereof, preferably at both ends of the squeeze film (10) which is to be configured, a receiver (13) and a sealing element (14) received therein for sealing off the squeeze film (10).

7. Bearing arrangement according to any of the preceding claims, **characterised in that** the encircling bearing (9) has on one face a coolant supply line (20) which is coupled to the at least one cooling duct (15) of the outer bearing ring (4) for supplying coolant, and in particular for supplying the coolant through a coolant distribution groove (26), oil preferably being used as a coolant.

8. Bearing arrangement according to any of the preceding claims, **characterised in that** the encircling bearing ring (9) has a coolant supply (22) for supplying oil of the squeeze film to the cooling duct (15), the coolant supply extending from the outer face of the encircling bearing ring (9) to the at least one cooling duct (15) of the outer bearing ring (4) or to a connecting duct between the outer bearing ring (4) and the at least one cooling duct (15).

9. Bearing arrangement according to any of the preceding claims, **characterised in that** the outer bearing ring (4) has a coolant discharge line (21) which is connected to the at least one cooling duct (15) for discharging coolant from the cooling duct (15) to the outside.

10. Bearing arrangement according to any of the preceding claims, **characterised in that** the inner bearing ring has at least one coolant supply line and the inner bearing ring is configured in particular in one or two parts.

11. Bearing arrangement according to any of the preceding claims, **characterised in that** the inner bearing ring (3) and/or the outer bearing ring (4) have at least one receiver (25) for receiving a sensor, in particular a thermocouple.

12. Bearing arrangement according to any of the preceding claims, **characterised in that** the inner bearing ring (3) and/or the outer bearing ring (4) have at least one receiver (25) in which a thermocouple is received for determining and monitoring the bearing temperature of the bearing arrangement (2) .

13. Bearing arrangement according to any of the preceding claims, **characterised in that** the encircling bearing ring (9) and the outer bearing ring (4) are interconnected in a positive and non-positive fit, in particular using an interference fit, a screw connection, a welded connection, a toothing and/or a feather key connection.

14. Turbo machine comprising a bearing arrangement according to any of the preceding claims, wherein the turbo machine has a housing (1) in which the bearing arrangement (2) can be arranged for mounting a shaft of the turbo machine, the turbo machine being configured in particular as an aircraft engine or a gas turbine, in particular as a stationary gas turbine.

## Revendications

1. Agencement de palier (2), en particulier pour une turbomachine, présentant :
une bague intérieure de palier (3) ;
une bague extérieure de palier (4) faisant face à la bague intérieure de palier (3), qui présente au moins un canal de refroidissement (15) ;
des corps roulants (7) en céramique, qui sont disposés entre la bague intérieure de palier (3) et la bague extérieure de palier (4) ; et
une cage de palier (9) qui est reliée à la bague extérieure de palier (4) et formée de manière à former un film de compression (10) d'huile entre son côté extérieur et un côté intérieur opposé au côté extérieur d'un logement (1) dans lequel l'agencement de palier peut être monté, la cage de palier (9) et la bague extérieure de palier (4) étant reliées entre elles par adhérence, sans centrage ni bridage, par des tiges de ressort supplémentaires sur un logement associé et la bague intérieure de palier (3) étant pourvue d'au moins une conduite d'alimentation en liquide de refroidissement (24) .

2. Agencement de palier selon la revendication 1, **caractérisé en ce que** la bague intérieure de palier (3) et/ou la bague extérieure de palier (4) est/sont pourvue(s) d'une contrainte résiduelle de compression, la contrainte résiduelle de compression étant produite dans la bague intérieure de palier (3) ou la bague extérieure de palier (4) en particulier par un procédé de nitruration, de préférence par un traitement thermique supplémentaire.

3. Agencement de palier selon l'une des revendications précédentes, **caractérisé en ce que** ledit au moins un canal de refroidissement (15) est formé à l'intérieur de la bague extérieure de palier (4) ou sur le côté extérieur de la bague extérieure de palier (4), ledit au moins un canal de refroidissement (15) étant formé sur le côté extérieur de la bague extérieure de palier (4) de préférence par un procédé de fabrication par enlèvement de copeaux ou ledit au moins un canal de refroidissement (15) étant formé à l'intérieur de la bague extérieure de palier (4) de préférence par un procédé de fabrication additif, en particulier par fusion au laser ou frittage au laser.

4. Agencement de palier selon l'une des revendications précédentes, **caractérisé en ce que** le canal de refroidissement (15) présente une section transversale circulaire, triangulaire, semi-circulaire, oblongue, ovale et/ou polygonale, le dimensionnement et/ou la forme de la section transversale du canal de refroidissement (15) étant constants ou variables sur la longueur du canal de refroidissement (15).

5. Agencement de palier selon l'une des revendications précédentes, **caractérisé en ce que** la cage de palier (9) présente au moins une rainure de distribution d'huile (11) sur son côté extérieur.

6. Agencement de palier selon l'une des revendications précédentes, **caractérisé en ce qu'**un joint est prévu sur le côté extérieur de la cage de palier (9) pour rendre étanches les deux extrémités du film de compression (10), la cage de palier (9) présentant sur son côté extérieur, de préférence aux deux extrémités du film de compression (10) à former, un réceptacle (13) et un élément d'étanchéité (14) reçu dans celui-ci pour rendre étanche le film de compression (10).

7. Agencement de palier selon l'une des revendications précédentes, **caractérisé en ce que** la cage de palier (9) présente d'un côté une conduite d'alimentation en liquide de refroidissement (20), qui est couplée audit au moins un canal de refroidissement (15) de la bague extérieure de palier (4) pour l'alimentation en liquide de refroidissement, et en particulier pour l'alimentation en liquide de refroidissement par une rainure de distribution de liquide de refroidissement (26), de l'huile étant de préférence utilisée comme liquide de refroidissement.

8. Agencement de palier selon l'une des revendications précédentes, **caractérisé en ce que** la cage de palier (9) présente une alimentation en liquide de refroidissement (22) pour alimenter le canal de refroidissement (15) en huile du film de compression, l'alimentation en liquide de refroidissement s'étendant du côté extérieur de la cage de palier (9) jusqu'audit au moins un canal de refroidissement (15) de la bague extérieure de palier (4) ou jusqu'à un canal de liaison de la bague extérieure de palier (4) avec ledit au moins un canal de refroidissement (15).

9. Agencement de palier selon l'une des revendications précédentes, **caractérisé en ce que** la bague extérieure de palier (4) présente une évacuation de liquide de refroidissement (21) qui est reliée audit au moins un canal de refroidissement (15) pour évacuer le liquide de refroidissement du canal de refroidissement (15) vers l'extérieur.

10. Agencement de palier selon l'une des revendications précédentes, **caractérisé en ce que** la bague intérieure de palier présente au moins une conduite d'alimentation en liquide de refroidissement et la bague intérieure de palier est en particulier formée en une ou deux parties.

11. Agencement de palier selon l'une des revendications précédentes, **caractérisé en ce que** la bague intérieure de palier (3) et/ou la bague extérieure de palier (4) présente au moins un réceptacle (25) pour recevoir un capteur, en particulier un thermocouple.

12. Agencement de palier selon l'une des revendications précédentes, **caractérisé en ce que** la bague intérieure de palier (3) et/ou la bague extérieure de palier (4) présente au moins un réceptacle (25) dans lequel est reçu un thermocouple pour déterminer et surveiller la température de palier de l'agencement de palier (2).

13. Agencement de palier selon l'une des revendications précédentes, **caractérisé en ce que** la cage de palier (9) et la bague extérieure de palier (4) sont reliées entre elles par complémentarité de forme et par adhérence, en particulier par un ajustement serré, un assemblage par vis, un assemblage par soudure, une denture et/ou un assemblage par clavette.

14. Turbomachine équipée d'un agencement de palier selon l'une des revendications précédentes, la turbomachine présentant un carter (1) dans lequel l'agencement de palier (2) peut être disposé en vue du montage d'un arbre de la turbomachine, la turbomachine étant en particulier réalisée sous la forme d'un moteur d'avion ou d'une turbine à gaz, en particulier d'une turbine à gaz stationnaire.
